Europäisches Patentamt

European Patent Office

Office européen des brevets

(11) Publication number: **0 088 626**
**A2**

# (12) EUROPEAN PATENT APPLICATION

(21) Application number: **83301223.0**

(22) Date of filing: **08.03.83**

(51) Int. Cl.³: **G 01 P 3/48, H 02 P 5/00**

(30) Priority: **09.03.82 US 356571**

(71) Applicant: **Ford Aerospace & Communications Corporation, 3939 Fabian Way, Palo Alto, Cal. 94303 (US)**

(43) Date of publication of application: **14.09.83 Bulletin 83/37**

(72) Inventor: **Nai-Tsang, Fred, 493 Walsh Road, Altherton California 94025 (US)**
Inventor: **Wuethrich, Ernest, 3738 Inglewood Drive, Santa Clara California 95090 (US)**

(84) Designated Contracting States: **DE FR GB**

(74) Representative: **Messulam, Alec Moses, A. Messulam & Co. 24 Broadway, Leigh on Sea Essex SS9 1BN (GB)**

(54) **Apparatus for controlling the speed of a rotating body.**

(57) A closed-loop system for precisely regulating the speed of an electrically driven rotating body. A tachometer rotor (53) mechanically linked to the rotating body is provided with p "teeth" (55) around its periphery. A sensor (57) produces a pulse signal upon passage of each of these teeth, to generate a cyclic tachometer signal having a frequency p times the frequency of rotation. A tachometer counter (5) counts this signal and produces a single output pulse after every n × p pulses from the sensor, such that the same one of the p teeth is responsible for triggering each of the successive output pulses, and variations in spacing between teeth do not cause variations in the period of the counter output.

A high frequency clock (17) is counted by a second counter (14) which transfers its count to a storage register (23) and resets upon each pulse from the tachometer counter (5), such that the count held by the storage register is a continuously updated, highly accurate digital respresentation of the period of the rotating body. A period comparator (39) derives a speed control signal which is proportional to the inverse of the difference between the count and a digital speed command signal representative of the rotational period at the desired rotational speed.

## APPARATUS FOR CONTROLLING THE SPEED
## OF A ROTATING BODY

The present invention relates generally to the field of devices for controlling the speed of rotating bodies. More particularly, the present invention concerns an apparatus for controlling the speed of an electrically driven momentum wheel in an inertial guidance system. Specifically, the invention is embodied in a closed loop speed control system capable of regulating speed to an accuracy of better than 0.0035%.

A great variety of electrical and electronic devices for controlling and regulating the speed of rotating mechanisms has evolved. Analogue systems generating an electrical signal which has a magnitude proportional to the speed of the rotating body, comparing this signal with a reference sign, and employing a closed loop feedback control system to vary the speed of the rotating body to reduce the difference or error signal have been in existence from a time prior to solid state electronics.

More recently, with the advent of inexpensive integrated digital circuitry, a new generation of speed controllers has evolved. Typically, the sophistication and circuit complexity which can be realized simply with the use of such integrated digital components has made possible improvement in the accuracy and stability with which rotational speed can be regulated.

However, there remain applications for speed control mechanisms which set such high requirements for regulation accuracy as to challenge the existing regulator designs. One such application is in inertial guidance systems for satellite spacecraft, where a plurality of momentum wheels oriented along different axes of rotation are used to orient the spacecraft

-2-

antenna system with a ground station antenna system to a very high degree of accuracy. In order to alter or correct the orientation of the spacecraft, the momentum wheels must be speeded up or slowed down, while to maintain a given orientation, these wheels must be maintained at a well-regulated controlled speed.

U.S. Patent No. 3,539,897 issued on November 10, 1978 to M. R. Sommeria, covers a servo control system for controlling the position of a machine tool or part thereof, under an automated or numerical control program. Information about the velocity of movement of the machine is derived from a tachometer, but such information is only used to critically control the damping of the system, such that machine position lags programmed position to the least degree possible.

U.S. Patent No. 3,559,018 issued on Jan. 26, 1971 to J. A. Fournier, and details a two-loop serve control system for controlling the speed of a motor. The system relies principally on an analogue control loop, but provides a secondary digital control loop for correcting the analogue loop to provide increased accuracy over a critical motor speed range.

U.S. Patent No. 3,626,257 issued on Dec. 7, 1971 to E. P. Morse, covers a circuit for measuring and servo-mechanically controlling the rotational speed of extremely slowly rotating shafts. The method involves the derivation of a control signal from both instantaneous shaft speed and shaft position signals.

U.S. Patent No. 3,748,533 issued on July 24, 1973 to R. F. South, covers an electronic tachometer in which pulses from a transducer connected to the rotating apparatus are counted during a pre-established time period, such that the count is directly proportional to the rotational speed.

U.S. Patent No. 4,050,747 issued on September 27, 1977 to Ruhnau et al., describes and claims a wheel speed measuring circuit in which a sinusoidal signal from a sensor is converted into a square wave, and errors in the signal resulting from mechanical imperfections in the sensor are compensated by deriving separate counts of the positive and negative going transitions of the square wave.

U.S. Patent No. 4,056,287 issued November 1, 1977 to W. Gudat details a wheel speed measuring circuit in which a count is derived which is representative of the length of one half cycle of the sinusoidal voltage produced by the wheel sensor, while the frequency being counted is varied as an exponential function of wheel period, such that an adequately large count to ensure the desired resolution can be derived even at low wheel speeds.

U.S. Patent No. 4,072,364 issued February 7, 1978 to W. Gudot et al., covers a wheel speed measuring circuit similar to the immediately preceding reference, excepting that errors resulting from mechanical imperfections in the speed sensor are compensated by comparing the counts deriving from the positive and negative cycles of the sensor waveform.

U.S. Patent No. 4,125,295 issued November 14, 1978 to Ruhnou et al., and details a wheel speed measuring circuit in which the speed range over which the circuit can be utilized is varied by varying the frequency of a counted signal in accordance with the wheel speed, or by varying the time duration during which the count is accumulated.

According to the present invention, there is provided an apparatus for controlling the speed of a rotating body, comprising tachometer means for deriving a periodic electrical pulse signal having a period which is inversely proportional to the rotational frequency of said body; free-running counter means connected to said tachometer means for continuously counting at a fixed frequency and accumulating a count throughout each period of said periodic pulse signal, for responding to each said periodic pulse signal by resetting said count to zero, and for continuously producing a digital electrical signal which is a numerical representation of said count at the end of the most rcent period of said periodic pulse signal; means to produce a command digital reference signal representative of the desired rotational speed of said rotating body; period comparator means for comparing said digital electrical signal with said digital reference signal and for generating in response to the difference therebetween a speed control signal having a magnitude representative of said difference; speed control means connected to said period comparator means to vary the rotational speed of said rotating body in response to said speed control signal in a sense to continuously minimise said difference between said digital electrical signal and said digital reference signal.

Preferably the tachometer means includes a tachometer rotor mechanically coupled to the rotating body and having a plurality $p$ of sensible poles spaced about the periphery thereof for generating a tachometer electrical signal by means of a sensor. A tachometer counter produces an output pulse signal for each $n \times p$ cycles of the tachometer signal where $n$ is an integer, such that each pulse of the output signal is triggered by the passage of the same one of the $p$ sensible poles, and variations in the spacing of the poles do not affect the output period of the tachometer counter.

A free-running counter counts at a fixed frequency during each period of the tachometer counter, and thus accumulates a count which is an accurate representation of the length of the period. At the end of each period of the tachometer counter, the count is transferred into a buffer register, and the free-running counter is then reset, such that the buffer register always contains a numerical representation of the count at the end of the most recent period of the tachometer counter.

This numerical representation is compared with a numerical reference signal representative of the desired speed in an arithmetic-and-logical unit, and an error signal is produced. A speed control means responds to the error signal by varying the speed of the rotating body in a sense to minimize the error.

The invention will now be described further, by way of example, with reference to the accompany drawings, in which:

Figure 1 is a detailed schematic drawing in block diagram form of an electrical speed control apparatus according to the present invention;

Figure 2 is a schematic representation of tachometer means of a type useful in the present invention; and

Figure 3 is a timing diagram illustrating the relative time relationships of several of the electrical signals produced within the apparatus of Figure 1.

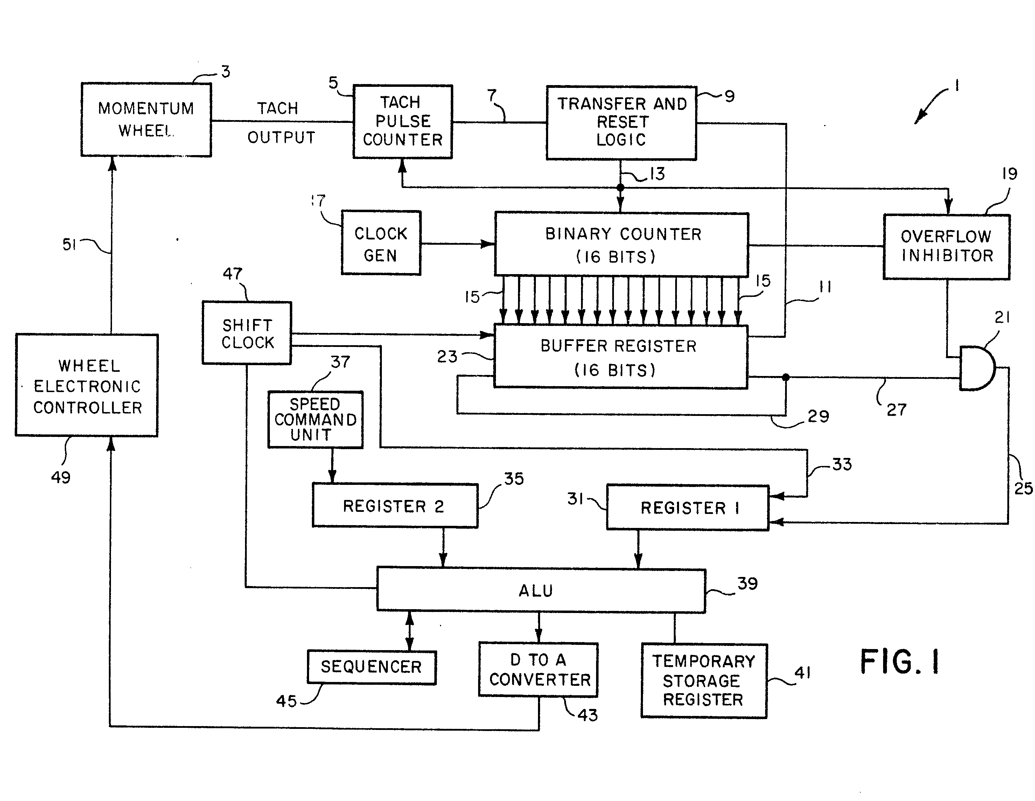

In Figure 1, an electronic apparatus 1 for controlling the speed of a rotating body to a high degree of accuracy may be used to regulate the speed of a momentum wheel, as indicated by numeral 3, for example, although the apparatus will also find many other uses in speed regulation.

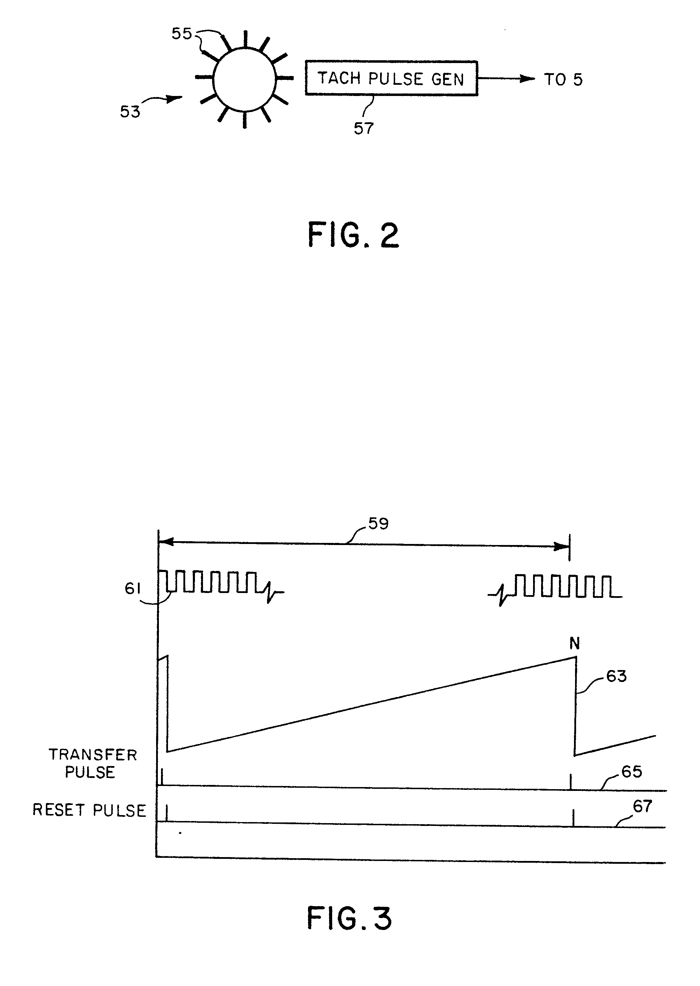

Therefore, understanding that momentum wheel 3 is merely representative of a large variety of rotating bodies whose speed must be precisely controlled and made to conform to a commanded, variable speed, the means for accomplishing this end will now be described. Within the block labeled momentum wheel 3 is a tachometer which is not shown in Figure 1, but will be described later in some detail with respect to Figure 2. For now, it may be noted that the function of this tachometer is to output a cyclic electrical tachometer signal consisting of a series of pulses on the line labeled "tach output" in Figure 1. This tachometer signal is counted in a tach pulse counter 5, which produces a periodic electrical pulse signal on line 7, to provide an input to a transfer and reset logic circuit 9.

As will be explained later with respect to Figures 2 and 3, the tachometer signal at the input to counter 5 has a frequency which is an integral multiple p of the frequency of rotation of the momentum wheel 3. Counter 5 counts this incoming tachometer signal, and outputs a single pulse on line 7 after each n x p cycles of the tachometer signal, such that the frequency of the periodic electrical pulse signal on line 7 is directly proportional to the frequency of the tachometer signal, being a fraction $1/(n \times p)$ thereof.

Transfer and reset logic 9 detects the leading edge of each incoming pulse of the periodic electrical pulse signal on line 7, and produces in response to each pulse of this signal a transfer pulse on line 11, and a reset pulse on line 13.

A counter 14, which might be a 16-bit digital counter for example, counts the output of a free-running, fixed frequency clock generator 17, producing a frequency of, for example, 1 MHz. Counter 14 provides a 16-bit numerical representation of the accumulated count on sixteen corresponding output lines 15 to a buffer register 23. The transfer pulse produced on line 11 by transfer and reset logic circuit 9 immediately following each pulse on line 7 "clocks" the signal present on lines 15 into register 23. The transfer pulse produced on line 11 by transfer and reset logic circuit 9 immediately following each pulse on line 7 "clocks" the signal present on lines 15 into register 23, whereupon counters 14 and 5 are immediately reset.

Consequently, register 23 always contains the numerical representation of the count obtained at the end of the most recent period of the periodic signal on line 7. Further, since the period of the signal on line 7 is an integral multiple of the period of the rotating body represented by the momentum wheel 3, the signal present within the register is proportional to the period of wheel 3.

From the foregoing, it will be apparent that the tachometer present within block 3 of Figure 1 and tach pulse counter 5 together comprise a tachometer means for deriving a periodic electrical pulse signal having a period which is inversely proportional to the rotational frequency of the rotating body, while transfer and reset logic circuit 9, clock generator 17, counter 14 and buffer register 23 together comrise a free-running counter means for continuously producing a digital electrical signal which is a numerical representation of the period of rotation of the rotating body during the most recent measuring period.

In the remaining circuitry of Figure 1, the numerical representation of the period of the momentum wheel 3 is compared with a command reference signal to determine the difference therebetween, and correspondingly to correct the speed of the wheel 3. For this purpose, a register output line 27 is connected by means of an AND gate 21 to the input line 25 of a storage device 31, labeled register 1 in Figure 1. A speed command unit 37 generates a digital speed reference signal in the form of a 16-bit representation of the period corresponding to the required speed of the rotating body represented by the momentum wheel 3. Speed command unit 37 could be a manually set control together with the circuitry needed to translate the set speed into a numerical representation of the corresponding period, or could be some form of automatic controller accepting any of a number of inputs and deriving from them the required speed, and outputing a numerical representation of the corresponding period. In either case, the reference signal from unit 37 is stored in register 2, numeral 35 in Figure 1.

An arithmetic and logic unit 39 compares the numerical signals present in registers 1 and 2, and derives from their difference an error signal in numerical or digital form. This error signal is sent to D to A converter 43, where it is converted into an appropriate drive signal which might be a varying DC voltage which is inputed to a wheel electronic controller 49. Controller 49 controls the electrical energisation supplied to the momentum wheel 3, and thus varies the speed of wheel 3 so as to minimise the speed error.

Within the context of the present invention, registers 1 and 2, arithmetic and logic unit 39, and D to A converter 43 may be thought of as together comprising a period comparator means for comparing the numerical signal contained within register 23 with the reference signal produced by speed command unit 37, and deriving therefrom a proportional speed control signal.

Since there will be times when momentum wheel 3 must be started from rest, some provision to disable essentially the speed control functions of the circuit of Figure 1 is desirable. Since counter 14 will overflow during wheel start-up because of the very long wheel period during these times, an overflow inhibitor 19 has been provided to prevent the false readings which result from overflow from causing malfunction of the apparatus.

Overflow inhibitor 19 is connected to counter 14 to sense an overflow thereof, whereupon inhibitor 19 puts out a logic "0" to AND gate 21, thus inhibiting the transmission of false period data to register 1.

A shift clock 47 is used to "clock" the 16 bits of data serially out of register 23 and into register 1 at, for example, a 500 kHz transfer rate. In order that the same sixteen bits of data should be replaced in register 23, such that the register does not at any time contain a false reading of zero, a data recycle line 29 is provided.

Should overflow occur at very low start-up speeds, shift clock 47 will clock a 16-bit underspeed signal into register 1. In the illustrated embodiment, this underspeed signal will be a string of 16 "0"'s. Upon this occurrence, unit 39 will respond by producing a "full torque" control signal, representing a maximum error signal to controller 49. In this regard, the importance of providing data recycle line 29 becomes clear. Without this line, a false full torque demand might be outputed by unit 39 to controller 49 during normal operation of the circuit, which could result in instability.

A temporary storage register 41 serves as a "scratch-pad memory" for arithmetic and logic unit 39, storing the intermediate results of calculations. A sequencer 45 controls the operation of unit 39 and shift clock 47 such as to provide the above sequence of operations, resulting in the comparison of the reference signal with the signal present in register 23, and the production of a speed control signal.

Turning now to Figures 2 and 3, the signal processing aspects of the present invention which result in the cancellation of errors from mechanical imprecision in the tachometer will be explained.

Figure 2 illustrates in a somewhat schematic way the nature of the tachometer and sensor which produce the pulse train present on the line labeled "tach output" in Figure 1. Fundamentally, the tachometer comprises a tachometer rotor 53 which either forms an integral part of the rotating body whose speed is being regulated, or else is mechanically interconnected to it in such a manner that rotor 53 is driven at the same speed.

Substantially equispaced about the periphery of rotor 53 are a plurality of sensible poles 55, indicated generally by short radial lines in Figure 2. These poles might be the poles of a magnet or magnets in one variety of tachometer, might be alternating bands which are more or less reflective of light or other radiation, or any other form of sensible or distinguishable regions spaced about the periphery of rotor 53 for the purpose of deriving an electrical signal having a frequency proportional to rotational speed.

A tachometer sensor in the form of a tach pulse generator 57 in close proximity to the sensible poles 55 of rotor 53 senses the passage of each pole as rotor 53 turns, and produces in response thereto a single output pulse on the line labeled "to 5" in Figure 2. The exact nature of tach pulse generator 57 will, of course, vary according to the nature of sensible poles 55, but it might be based upon a Hall-effect sensor, or some variety of photocell, etc.

Although the varieties of tachometer represented generally by Figure 2 are simple and fairly reliable, they are subject to error due to slight unevenness in the spacing of the sensible poles 55. Although careful machining and other precautions can reduce the slight variations in spacing between poles 55, a certain amount of error will always remain. In systems required to control speed to within 35 parts per million, the required accuracy of spacing of poles 55 is nearly impossible to produce.

According to the present invention, there errors can be prevented from affecting the performace of the speed control apparatus if the period of the rotating body is always measured as the time elapsed between movements past the sensor 57 of the same tooth. In this way, variations in spacing of the teeth will have no bearing on the result.

Turning now to Figure 3, the time relationship of the various signals required in the present invention will be discussed.

In Figure 3, 61 represents the signal present on the line labeled tach output in Figure 1, and is the output of tach pulse generator 57 in Figure 2. Dimension line 59 in Figure 3 represents an integral multiple of the period of the rotating body, and might for example be the time required for three revolutions thereof. Consequently, if p represents the number of sensible poles on the periphery of rotor 53, and n represents an integer such as 3, then n x p cycles of waveform 61 will occur within the period represented by line 59. In the case of a rotor having 12 sensible poles, then, 3 complete revolutions of rotor 53 will produce exactly 36 cycles of waveform 61.

Accordingly, if tach pulse counter 5 in Figure 1 were set to generate an electrical pulse signal on line 7 after every 36 pulses of input signal, then the occurrence of pulse signal on line 7 would always be occasioned by the passage of the same one of poles 55 past tach generator 57 in Figure 2. In practice, this is exactly the arrangement employed by the present invention for the elimination of the pulse-to-pulse jitter which so often plagued the prior art tachometer circuits.

Characteristic 63 in Figure 3 represents the successive accumulation of the count in counter 14 thoughout the period established by tach pulse counter 5. At the end of each such period transfer and reset logic 9 generates first a transfer pulse as shown on characteristic line 65. This transfer pulse is on line 11 in Figure 1, and serves to clock the count from counter 14 into register 23, as already explained above. The transfer pulse is followed immediately by the reset pulse on characteristic 67. The reset pulse resets the count 63 to zero, and also resets tach pulse counter 5 and overflow inhibitor 19.

The timing differences among these signals have been greatly exaggerated in Figure 3, while in practice the entire transfer and reset operation can take place in a time of the order of one microsecond. Consequently, it is possible to transfer and reset within approximately one count of the 1 MHz clock 17 in Figure 1, such that the count is carried out on a substantially continuous basis. Because of this "pipeline" data approach, the circuit of Figure 1 has proved capable of an accuracy of the order of 35 parts per million or better, and also possesses wider bandwidth and greater stability than the prior art approaches.

## CLAIMS

1.   Apparatus for controlling the speed of a ·otating body, comprising tachometer means (57,5) for deriving a periodic electrical pulse signal having a period which is inversely proportional to the rotational freq··-ncy of said body (53); free-running counter mea..3 (17) connected to said tachometer means (57,5) for continuously counting at a fixed frequency and accumulating a count throughout each period of said periodic pulse signal, for responding to each said periodic pulse signal by resetting said count to zero, and for continuously producing a digital electrical signal which is a numerical representation of sa_d count at the end of the most rcent period of said periodic pulse signal; means (37) to produce a command digital reference signal representative of the desired rotational speed of said rotating body (53); period comparator means (39) for comparing said digital electrical signal with said digital reference signal and for generating in response to the difference therebetween a speed control signal having a magnitude representative of said difference; speed control means (49) connected to said period comparator means (39) to vary the rotational speed of said rotating body (53) in response to said speed control signal in a sense to continuously minimise said difference between said digital electrical signal and said digital reference signal.

2.   The apparatus of Claim 1, wherein said tachometer means comprises tachometer signal generating means (57) for generating a tachometer signal at a frequency which is an integral multiple of the rotational frequency of said rotating body.

3.   The apparatus of Claim 2, wherein said tachometer means comprises tachometer counter means (5) connected to said tachometer signal generating means (57) and producing in response to said tachometer signal said periodic pulse having a period which is an integral multiple of the period of said tachometer signal.

4.   The apparatus of Claim 1, wherein said tachometer means comprises a tachometer rotor (53) mechanically coupled to said rotating body for synchronous rotation therewith, and a tachometer sensor (57) adjacent and in close proximity to the periphery of said rotor, said rotor having a plurality of sensible poles (55) periodically spaced about the periphery thereof, said tachometer sensor (57) having sensing means therewithin to respond to the passage of each said sensible pole by producing a corresponding electrical output pulse.

5.   The apparatus of claim 4, wherein the tachometer rotor (53) has p sensible poles substantially equispaced about the periphery thereof; the tachometer sensor means (57) produces a cyclic electrical signal having a frequency p times the rotational frequency of said rotating body, a counter means (5) is connected to said sensor means (57) to count the cycles of said cyclic electrical signal and to produce an output periodic electrical pulse signal for each n x p cycles of input signal, where n is an integer; whereby the successive output pulse signals are produced in response to the passage by the sensor of the same one of the p poles, and variations in interpole spacing do not cause variations in the frequency of the output pulse signal.

6.   The apparatus of any preceding claim, wherein said free-running counter means includes a free-running, fixed frequency clock signal generator (17) and a numerical counter (14) connected to said clock signal generator to count the cycles thereof.

7.    The apparatus of any preceding claim, wherein said free-running counter means includes a buffer  gister (23) for storing said count at the end of each period of said periodic pulse signal.

8.    The apparatus of Claim 7,  wherein said counter means comprises transfer and reset means (9) connected to receive said periodic electrical pulse signal and to respond thereto by: (1) causing said count to be transferred to said buffer register, and (2) causing said counter means to be reset to a preset initial condition.

9.    The apparatus of any preceding claim, wherein said counter means includes counter overflow detector means (19) to detect counter overflow and, in response thereto, to transmit an underspeed digital electrical signal to said comparator means (39).

10.    The apparatus of any preceding claim, wherein said period comparator means comprises a first register (31) for storing said digital electrical signal, a second register (35) for storing said digital reference signal, an arithmetic-and-logical means (39) for comparing said digital electrical signal with said digital reference signal to produce a digital error signal, and a digital-to-analogue converter means (42) to produce said speed control signal in response to said digital error signal.

FIG. 1

FIG. 2

FIG.3